# EUROPEAN PATENT APPLICATION

(11) **EP 3 243 620 A1**
(43) Date of publication of application: **15.11.2017**
(21) Application number: 16168715.7
(22) Date of filing: 09.05.2016
(51) Int. Cl.: B28B 1/00, B29C 67/00, B22F 3/105

(54) **ADDITIVE MANUFACTURING SYSTEM**

(71) Applicant: Siemens Aktiengesellschaft, 80333 München (DE)
(72) Inventor: Graichen, Andreas, 602 14 Norrköping (SE); Johansson, Pontus, 610 13 Lotorp (SE); Nordenberg, Eva, 602 13 Norrköping (SE); Persson, Anders, 610 13 Lotorp (SE)

(57) **Abstract**

The present invention relates to an additive manufacturing system (1) comprising at least one powder based additive manufacturing machine (2) having a build chamber (3), at least one stationary powder storage container (4), and a powder feeding device (6) for feeding powder from the at least one powder storage container (4) into the build chamber (3), characterized in that said build chamber (3), said stationary powder storage container (4) and said powder feeding device (6) form a part of a powder handling system, which is hermetically sealable in a powder-tight manner and to which a movable powder storage container (31) can be connected, said powder handling system being designed to selectively feed powder from the movable powder storage container (31) to the stationary powder storage container (4) or to remove powder from the build chamber (3) in the hermetically sealed state. Moreover, the present invention relates to a Method for feeding powder into and removing powder from a build chamber (3) of at least one additive manufacturing machine (2), characterized in that the feeding and the removal of the powder takes place within a hermetically sealable powder handling system.

## Description

The present invention relates to an additive manufacturing system comprising at least one powder based additive manufacturing machine having a build chamber, at least one stationary powder storage container, and a powder feeding device for feeding powder from the at least one powder storage container into the build chamber.

Various types of powder based additive manufacturing systems of the above-mentioned kind are already known, such as for electron beam melting or laser additive manufacturing. They all have in common that a workpiece is build up in layers on the basis of a powder, in particular a metallic powder. Such processes are also designated as 3D-printing processes.

There is currently a high risk for operators handling the powder when operating additive manufacturing systems, in particular when manually filling and emptying its stationary powder storage container. The fine powder particles infiltrate the ambient air and are breathed in by the operators leading to serious health impairment. Moreover, the powder itself can be deteriorated or contaminated by the ambient air causing defects in the manufactured components.

Against this background it is an object of the present invention to provide an improved additive manufacturing system of the above-mentioned kind.

In order to solve this object the present invention provides an additive manufacturing system of the above-mentioned kind, which is characterized in that said build chamber, said stationary powder storage container and said powder feeding device form a part of a powder handling system, which is hermetically sealable in a powder-tight manner and to which a movable powder storage container containing fresh powder can be connected, said powder handling system being designed to selectively feed powder from the movable powder storage container to the stationary powder storage container or to remove powder from the build chamber in the hermetically sealed state. Thanks to such a hermetically sealable powder handling system, in which all components transporting or storing powder are sealable in a powder-tight manner at least during the normal operation of the system, it is effectively prevented that the metallic powder particles can infiltrate the ambient air or can be deteriorated or contaminated by the ambient air. Accordingly, there is neither a health risk for operators, who handle the additive manufacturing system of the present invention, nor a risk of deterioration of the workpiece quality due to adverse influences of the environment over the powder.

According to one aspect of the present invention said powder handling system comprises a first powder conveyor pipe for feeding powder from said movable powder storage container to said stationary powder storage container, a second powder conveyor pipe for removing powder from the build chamber, and a vacuum pump designed to be selectively connected to said first powder conveyor pipe or said second powder conveyor pipe by means of corresponding valves. This leads to a simple and inexpensive structure of the powder handling system.

Preferably said powder handling system comprises a sieving device designed and arranged for sieving the powder received from the movable powder storage container and/or removed from the build chamber, whereas a bucket for oversized material is preferably provided, which can be connected to said sieving device. Thanks to such a sieving device oversized material present in the fresh powder received from the movable powder storage container or present in the used powder removed from the build chamber is withdrawn and collected in a separate bucket. As a consequence, the powder can be used again without deteriorating the quality of the next build-up process.

The powder handling system advantageously comprises an intermediate powder storage container arranged downstream the sieving device for receiving sieved powder from the sieving device, wherein the stationary powder storage container, the sieving device and the intermediate powder storage container are preferably connected to each other to form a closed-loop powder recycling arrangement for recycling used powder in order to use it once again in the additive manufacturing machine.

According to one aspect of the present invention the intermediate powder storage container is connected to a vibrator device and/or comprises a heating device for heating received powder and/or a mixing device for mixing received powder. A vibrator device facilitates an emptying of the intermediate powder storage container. A heating device enables a preheating of the powder to a desired temperature and a drying of the powder before delivering the powder to the build chamber in order to optimize the next build-up process. Preferably, the heating device is designed to preheat the powder contained therein to some 100°C, in particular to a temperature between 100°C and 300°C. A mixing device prevents the formation of powder layers having different grain sizes.

Preferably a second movable bucket is connectable to a downstream side of the intermediate powder storage container in order to receive used powder, which is not to be used once more in the additive manufacturing operation, which needs to be stored intermediately during maintenance work or the like, etc. As the movable powder storage container the second movable bucket is advantageeously connectable to the powder handling system as well as openable and closable in a powder-tight manner.

According to one aspect of the present invention said stationary powder storage container is connected to a vibrator device and/or comprises a weighing device and/or comprises a mixing device. A vibrator device facilitates an emptying of the stationary powder storage container. The weighing device is designed to weight the powder stored in the stationary powder storage container. On the basis of the weight it can be determined how much powder has to be delivered to the stationary powder storage container after one operating cycle in order to perform the next operating cycle. A mixing device prevents the formation of powder layers having different grain sizes.

The second powder conveyor pipe is advantageously coupled to a suction hose, which is arranged within the build chamber and is manually movable by an operator, who stands in front of the additive manufacturing machine, in particular by means of gloves reaching into said build chamber. Such a suction hose is very comfortable to handle by the operator in order to remove powder from the build chamber.

Preferably, said powder handling system comprises a feeding station having a hermetically sealable cabin for receiving the at least one movable powder storage container, said cabin advantageously comprises a suction hose, which is arranged within the cabin and is manually movable by an operator, who stands in front of the cabin, in particular by means of gloves reaching into said cabin. Such a feeding station facilitates the feeding of fresh powder to the powder handling system.

The additive manufacturing system according to the present invention preferably comprises several additive manufacturing machines forming one single powder handling system. In this context, the vacuum pump, the sieving device and an intermediate powder storage container may form a central powder treatment unit, which can be used by all additive manufacturing machines.

In order to solve the above-mentioned object the present invention further provides a method for feeding powder into and removing powder from a build chamber of at least one additive manufacturing machine, which is characterized in that the feeding and the removal of the powder takes place within a hermetically sealable powder handling system.

According to one aspect used powder is removed from said additive manufacturing machine, is treated, in particular by sieving, within said sealed powder handling system and is thereafter reused within said or another additive manufacturing machine coupled to the powder handling system. In other words, used powder is recycled within the system.

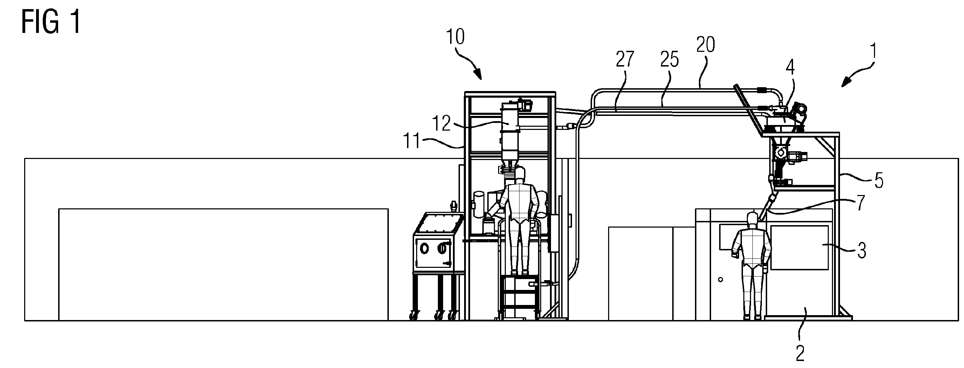

Further features and aspects of the present invention will become apparent to a skilled person from the following description of an embodiment of an additive manufacturing system according to the present invention with reference to the accompanying drawing. In the drawing
- Figure 1: is a front view of an embodiment of an additive manufacturing system according to the present invention;

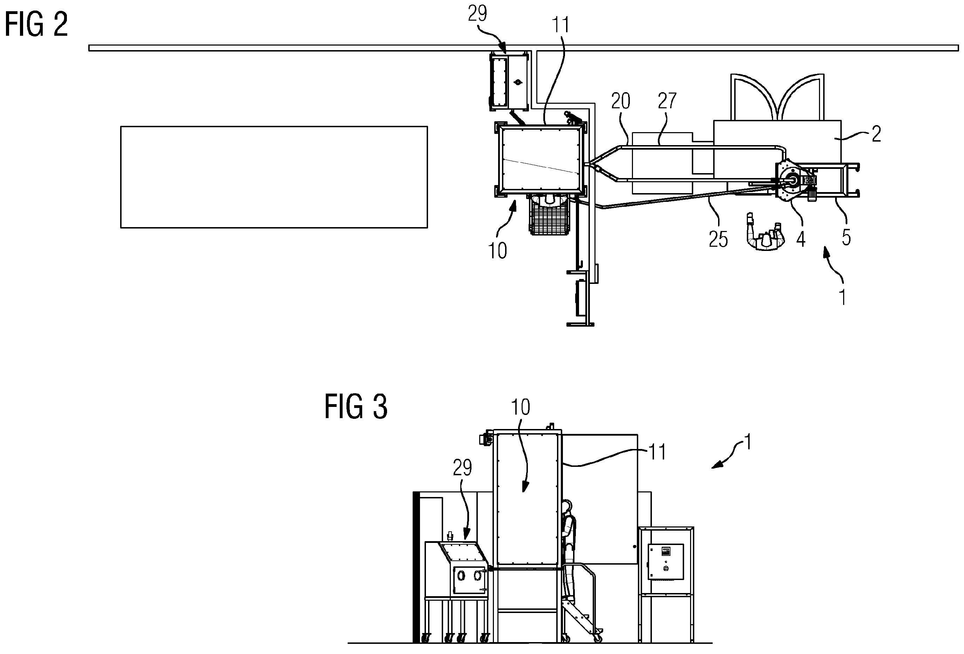

- Figure 2: is a top view of the additive manufacturing system shown in figure 1;
- Figure 3: is a side view of the additive manufacturing system shown in figure 1;
- Figure 4: is an enlarged front view of a first arrangement of the additive manufacturing system shown on the left side of figure 1;
- Figure 5: is a side view of the first arrangement shown in figure 4;
- Figure 6: is a rear view of second arrangement of the additive manufacturing system shown on the side of figure 1;
- Figure 7: is a side view of the second arrangement shown in figure 6;
- Figure 8: is a front view of a feeding station of the additive manufacturing system shown on the left side of figure 3;
- Figure 9: is a top view of the feeding station;
- Figure 10: is a cross-sectional view of the feeding station along line X-X in figure 8 and
- Figure 11: is a cross-sectional view of the feeding station along line XI-XI in figure 9.

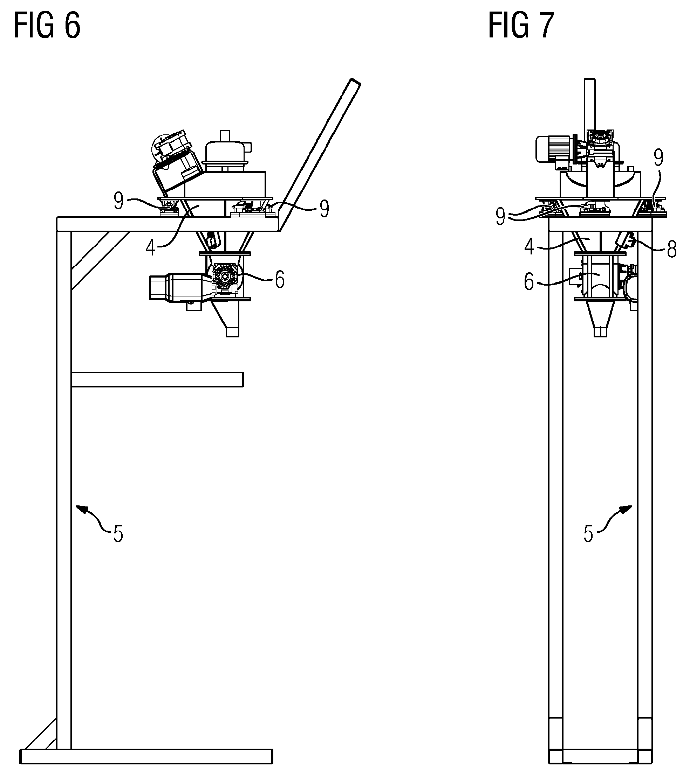

The drawing shows an additive manufacturing system 1 according to an embodiment of the present invention. The additive manufacturing system 1 comprises a powder based additive manufacturing machine 2, such as for electron beam melting or laser additive manufacturing, having a build chamber 3. In order to supply the build chamber 3 with powder, a stationary powder storage container 4 is positioned above the additive manufacturing machine 2. According to the present embodiment the storage container 4 is fixed to a framework 5 positioned right next to the additive manufacturing machine 2 as shown in detail in figures 6 and 7. However, it is also possible to integrate the storage container 4 in the additive manufacturing machine 2. The storage container 4 is connected to a feeding device 6, which is adapted to batchwise feed powder into the build chamber 3. For this a Y-shaped feeding pipe 7 connects the feeding device 6 with the build chamber 3. The storage container 4 is provided with a vibrator device 8 in order to assist the discharging of the storage container 4. Moreover, the storage container 4 rests on a weighing device 9 in order to weight the powder stored in the storage container 4. Furthermore, the storage container 4 may be equipped with a mixing device (not shown), such as a mixing screw, in order to mix the powder contained in the powder storage container 4. Such a mixing device can prevent the formation of powder layers having different grain sizes.

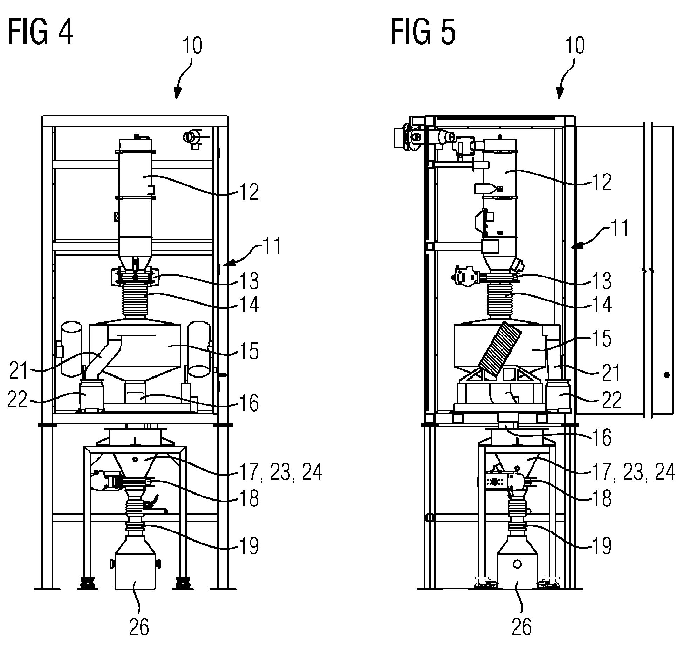

As a further component of the additive manufacturing system 1 a central powder treatment unit 10 is provided, which is shown in detail in figures 4 and 5. The powder treatment unit 10 comprises a framework 11 receiving - from the top to the bottom - a vacuum pump 12, a valve 13 connecting the vacuum pump to a flexible coupling joint 14, a sieving device 15 connected to the flexible coupling joint 14, a second flexible coupling joint 16 connecting the sieving device 15 with an intermediate storage container 17, and a valve 18 connecting the intermediate storage container 17 with a third flexible coupling joint 19. The vacuum pump 12 is connected to the stationary powder storage container 4 via a vacuum pipe 20. The sieving device 15 is provided with a branch pipe 21, through which oversized material sieved out by the sieving device 15 can be discharged in a separate movable bucket 22. The intermediate powder storage container 17 is connected to a vibrator device 23 for oscillating the container 17 as well as with a heating device 24 for heating the powder stored in the container 17. The third flexible coupling joint 19 is connected to the stationary powder storage container 4 of the additive manufacturing machine 2 via a first powder conveyor pipe 25. Moreover, the flexible coupling joint 19 is designed to be connected to a movable bucket 26 placed at the bottom of the powder treatment unit 10 beneath the flexible coupling joint 19. Even though not shown, the movable bucket 10 may be arranged as it is described subsequently for a movable powder storage container 31, in a separate feeding station allowing a handling, in particular a connecting, opening and closing of the movable bucket 10 in a powder-tight manner. The flexible coupling joint 14, which is placed directly above the sieving device 15, can be selectively coupled by means of the valve 13 with a second powder conveyor pipe 27 leading to the stationary powder storage container 4 of the additive manufacturing machine 2 or with a suction pipe 28 leading to a feeding station 29.

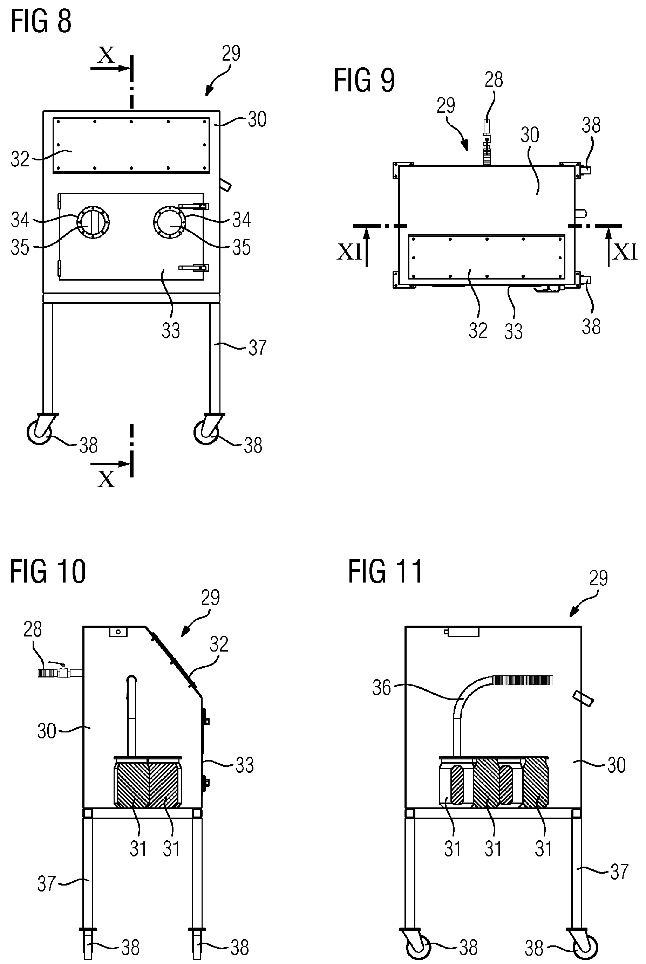

The feeding station 29, which is shown in detail in figures 8 to 11, comprises a hermetically sealable cabin 30 designed for receiving several movable powder storage containers 31 containing fresh powder. The cabin 30 comprises an inspection window 32 and a front door 33 being provided with openings 34 to which gloves 34 are fixed reaching inside the cabin 30. Accordingly, an operator can handle objects present within the cabin 30 without opening the front door 33. Within the cabin 30 a suction hose 36 is provided, which is connected to the suction pipe 28 connected to the flexible coupling joint 14 of the powder treatment unit 10. The cabin 30 is placed on a movable table 37 provided with rolls 38.

According to the present invention the build chamber 3, the stationary power storage container 4, the feeding device 6, the powder treatment unit 10 and the cabin 30 form a hermetically sealable powder handling system being designed to selectively feed powder from one of the movable powder storage containers 31 received in the cabin 30 to the stationary powder storage container 4 of the additive manufacturing machine 2 or to remove powder form the build chamber 3 without the possibility, that powder can infiltrate the ambient air during these operations.

For filling up the stationary powder storage container 4 with fresh powder, movable powder storage containers 31 containing such fresh powder are placed in the cabin 30 by opening and closing the front door 33. After closing the front door 33, the powder handling system is hermetically sealed. Then, the vacuum pump 12 is started, whereupon an operator can suck the fresh powder present in one of the movable powder storage containers 31 by means of the suction hose 36 through the suction pipe 28 and the flexible coupling joint 14 into the sieving device 15. The sieving device 15 sieves the fresh powder and removes oversized material into the bucket 22. The remaining powder falls through the second flexible coupling joint 16 into the intermediate powder storage container 17, in which the powder is heated to a desired temperature in order to pre-tempering the powder to a desired temperature , preferably between 100°C and 300°C, and to reduce the moisture content of the powder. Afterwards the powder is transported to the stationary powder storage container 4 via the first powder conveyor pipe 25. Subsequently the additive manufacturing machine 2 can be operated, whereupon the needed powder is delivered by means of the feeding device 6 from the storage container 4 into the build chamber 3 via the feeding pipe 7. For this purpose, a rotary valve may be provided between the stationary powder storage container 4 and the build chamber 3.

As soon as the operation of the additive manufacturing machine 2 is completed, a suction hose (not shown) can be coupled to the feeding pipe 7 to suck the remaining powder present in the build chamber 3 of the additive manufacturing machine to the sieving device 15 via a branch pipe of the Y-shaped feeding pipe 7, the second powder conveyor pipe 27 and the flexible coupling joint 14. In the sieving device 15 oversized powder is removed in the bucket 22, whereas the remaining powder is stored and heated in the intermediate powder storage container 17.

In order to empty the intermediate storage container 17, the movable bucket 25 can be connected to the flexible coupling joint 19 arranged underneath the intermediate powder storage container 17.

Moreover, powder samples can be retrieved for quality control without a need for the operator to contact the powder.

A main advantage of the additive manufacturing system 1 consists in the eliminated health risk for operators handling the metallic powder when operating the additive manufacturing system 1. Moreover, the powder itself cannot be deteriorated or contaminated by the ambient air. Accordingly, defects in the manufactured components caused by such deterioration or contamination are prevented. Furthermore, the additive manufacturing device 1 allows the recycling of used powder within a closed and powder-tight loop arrangement.

It should be noted that the above-described embodiment serves only as an example, and that modifications are possible without leaving the scope of protection defined by the accompanying claims. In particular, a plurality of additive manufacturing machines can be connected to the central powder treatment unit 10 and to the feeding station 29 in the above-described manner. Moreover, instead of the vacuum pump 12 another powder conveyor can be used, such as a screw conveyor or the like.

## Claims

1. Additive manufacturing system (1) comprising at least one powder based additive manufacturing machine (2) having a build chamber (3), at least one stationary powder storage container (4), and a powder feeding device (6) for feeding powder from the at least one powder storage container (4) into the build chamber (3), **characterized in that** said build chamber (3), said stationary powder storage container (4) and said powder feeding device (6) form a part of a powder handling system, which is hermetically sealable in a powder-tight manner and to which a movable powder storage container (31) can be connected, said powder handling system being designed to selectively feed powder from the movable powder storage container (31) to the stationary powder storage container (4) or to remove powder from the build chamber (3) in the hermetically sealed state.

2. Additive manufacturing system (1) according to claim 1, **characterized in that** said powder handling system comprises a first powder conveyor pipe (25) for feeding powder from said movable powder storage container (31) to said stationary powder storage container (4), a second powder conveyor pipe (27) for removing powder from the build chamber (3) and a vacuum pump (12) designed to be selectively connected to said first powder conveyor pipe (25) or said second powder conveyor pipe (27) by means of corresponding valves.

3. Additive manufacturing system (1) according to claim 1 or 2, **characterized in that** said powder handling system comprises a sieving device (15) designed and arranged for sieving the powder received from the movable powder storage container (31) and/or removed from the build chamber (3), whereas a bucket (22) for oversized material is preferably provided, which can be connected to said sieving device (15).

4. Additive manufacturing system (1) according to claim 3, **characterized in that** said powder handling system comprises an intermediate powder storage container (17) arranged downstream the sieving device (15) for receiving sieved powder from the sieving device (15), wherein the stationary powder storage container (4), the sieving device (15) and the intermediate powder storage container (17) are preferably connected to each other to form a closed-loop powder recycling arrangement.

5. Additive manufacturing system (1) according to claim 4, **characterized in that** the intermediate powder storage container (17) is connected to a vibrator device (22) and/or comprises a heating device (23) for heating received powder.

6. Additive manufacturing system (1) according to claim 4 or 5, **characterized in that** a second movable bucket (26) is connectable to a downstream side of the intermediate powder storage container (17).

7. Additive manufacturing system (1) according to one of the foregoing claims, **characterized in that** said stationary powder storage container (4) is connected to a vibrator device (8) and/or comprises a weighing device (9) and/or comprises a mixing device.

8. Additive manufacturing system (1) according to one of the claims 2 to 7, **characterized in that** the second powder conveyor pipe (27) is coupled to a suction hose, which is arranged within the build chamber (3) and is manually movable by an operator, who stands in front of the additive manufacturing machine (2), in particular by means of gloves reaching into said build chamber (3).

9. Additive manufacturing system (1) according to one of the foregoing claims, **characterized in that** said powder handling system comprises a feeding station (29) having a hermetically sealable cabin (30) for receiving the at least one movable powder storage container (31), said cabin (29) preferably comprises a suction hose (36), which is arranged within the cabin (30) and is manually movable by an operator, who stands in front of the cabin (30), in particular by means of gloves (35) reaching into said cabin (30).

10. Additive manufacturing system (1) according to one of the foregoing claims, **characterized in that** it comprises several additive manufacturing machines (2) forming one single powder handling system.

11. Method for feeding powder into and removing powder from a build chamber (3) of at least one additive manufacturing machine (2), **characterized in that** the feeding and the removal of the powder takes place within a powder handling system (1).

12. Method according to claim 11, **characterized in that** used powder removed from said additive manufacturing machine (2) is treated, in particular by sieving, within said sealed powder handling system (1) and thereafter reused within said or another additive manufacturing machine (2) coupled to the powder handling system (1).
